# EUROPEAN PATENT SPECIFICATION

(11) **EP 0 321 987 B1**
(45) Date of publication and mention of the grant of the patent: **15.03.1995**
(21) Application number: 88121533.9
(22) Date of filing: 22.12.1988
(51) Int. Cl.: B60L 7/24, B60T 13/58

(54) **Railroad train brake control system**
Eisenbahnbremsregelsystem
Système de commande d'un frein pour un train laminoir à rails

(30) Priority: 23.12.1987 IT 6811887
(43) Date of publication of application: 28.06.1989
(73) Proprietor: SAB WABCO S.p.A., I-10045 Piossasco (TO) (IT)
(72) Inventor: Restori,Ettore, I-10100 Torino (IT); Bortot,Renato, I-10100 Torino (IT); Casadei,Renato, I-10010 Candia Canavese (IT)
(74) Representative: Jorio, Paolo

(56) References cited:
- GB-A- 2 036 218
- US-A- 3 528 709
- SIEMENS ZEITSCHRIFT no. 6, 30 June 1965, Erlangen, DE pages 595 - 600; A. ASSMUS: "Fahr- und Bremssteurung der Lokomotive E 03"

## Description

The present invention relates to a railroad train brake control system, in particular, for a train featuring a front and rear electric locomotive and a given number of cars, and designed to travel at exceptionally high speed, e.g. in the region of 300 km/hour.

Railraod trains comprising at least one electric locomotive and a given number of cars normally feature two types of brakes, one electrodynamic and the other pneumatic (or electropneumatic), each controlled separately and independently by the crew.

The electrodynamic type is operated by supplying the electric motors (usually two) on the locomotive with a given armature current for producing a brake torque on the motors.

The pneumatic or electropneumatic type is operated by regulating the air pressure in the main brake line, for producing a given pressure in the brake control cylinders.

Known brake control systems have an operating mode selector (overload, run, slow brake, fast brake, etc) and an automatic regulating device for controlling air supply and exhaust on the main line according to the selector setting. Said automatic regulating device comprises a relay valve; a pair of electrovalves for suppling and exhausting a control chamber on the relay valve and a pair of pressure transducers for generating electric signals proportional to the pressure inside the relay valve control chamber and main line respectively.

These control systems comprise also (for instance the ones described in Patent GB-2.036.218) an electronic central processing unit connected with a first circuit for generating a first signal depending on the electrodynamic brake efficiency and connected with a second circuit for generating a second signal related with the travelling speed. The electronic central processor controls the excitation of the electrovalves and the electrodynamic brakes of the train on the basis of both electrical signals produced by said pressure transducers and on the basis of said first and second signals.

These known systems are designed to improve the electrodynamic braking at lower speed and are totally inadequate when applied to extremely high-speed train.

The aim of the present invention is to provide a railroad train brake control system designed to overcome the aforementioned drawback typically associated with known systems, and which also provides for a high degree of reliability and safety.

With this aim in view, according to the present invention, there is provided a railroad train brake control system, said train presenting at least one electric locomotive and a number of cars, and said system comprising:
a pneumatic brake comprising:
an air supply line;
a main air line;
a relay valve between said supply line and said main air line;
a pair of electrovalves for respectively suppling and exhausting a relay valve control chamber ;
a pair of pressure transducers for generating electric signals proportional to the air pressure in the main air line and a relay valve control chamber respectively;
said system further comprising:
a system operating mode selector (overload, run, slow brake, fast brake, etc) generating an electric brake control signal as function of its settings;
an electrodynamic brake;
first means for generating a first electric signal depending on electrodynamic braking efficiency of said electric locomotive;
second means for generating a second electric signal depending on the travelling speed of said train;
an electronic processing unit controlling the excitation of said electrovalves of said pneumatic brake and said electrodynamic brake on the basis of the settings of said selector, said first and second signals, and said electric signal supplied by said transducers,
characterized in that said electronic unit comprises first switch means controlled by said first signal and designed to assume, in the event of zero electrodynamic braking efficiency (or any rate below a given predetermined value), a first operation position wherein said electric signal on said selector is picked up directly, or a second operating position wherein, in the event of other than zero electrodynamic braking efficiency, the signal of said selector is fed to third means outputting a control signal for said pneumatic brake;
said third means being controlled by said first and second means, in a condition where the train is already subjected to maximum electrodynamic braking force, in order to decrease the pneumatic braking contribution with the increasing of the speed of train and decreasing pneumatic braking contribution alongside increasing electrodynamic braking efficiency correlated with the number of motors capable of electrodynamic braking.
A preferred non-limiting embodiment of the present invention will be described with reference to the accompanying drawings, in which:
Fig. 1 shows a schematic view of a railroad train featuring a system in accordance with the teachings of the present invention;
Fig.2 shows a simplified block diagram of the main parts in the Fig.1 system;
Fig.s 3 and 5 show electric diagrams of some of the circuits in the Fig.2 system;
Fig.4 shows a graph of brake air pressure alongside variations in various operating parameters;
Fig.6 shows a graph of a number of electric signals in the Fig.5 circuit in two different operating conditions.

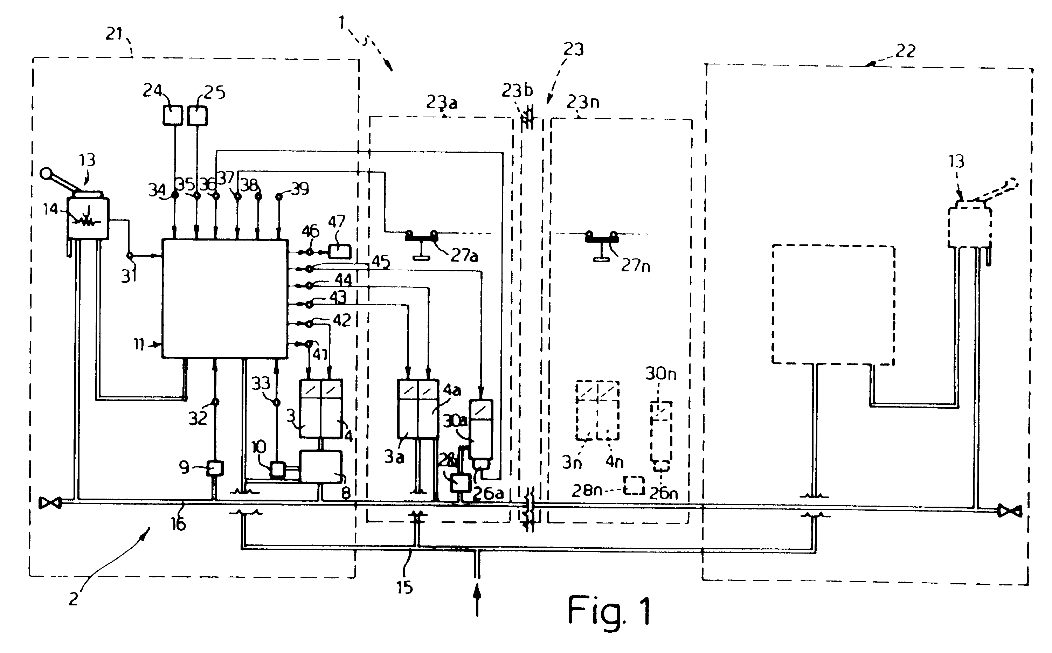

Number 1 in Fig.1 indicates a railraod train conveniently consisting of a front electric locomotive 21, a rear electric locomotive 22, and a number of cars 23 (23a, 23b, ... 23n).

Train 1 features a brake control system 2 in accordance with the present invention, and housed predominantly in the drive cabs of locomotives 21 and 22, and partly inside cars 23.

System 2 substantially comprises:
an air supply line 15 for supplying compressed air from a tank (not shown);
a main air line 16 connected to a known type of distributor (not shown) controlling the brake cylinders;
a selector 13 having a number of system 2 operating mode settings (isolate, overload, run, slow brake, fast brake, etc.), each corresponding to an electric reference signal generated, for example, by a potentiometer 14 assigned to selector 13;
a relay valve 8 between air supply line 15 and main line 16;
a pair of electrovalves 3 and 4 for respectively supplying and exhausting a relay valve 8 control chamber (not shown);
a pair of pressure transducers 9 and 10 for generating electric signals proportional to the air pressure inside main line 16 and said relay valve 8 control chamber respectively;
an electronic processing unit 11 for controlling excitation of electrovalves 3 and 4 controlling supply and exhaust of main line 16, on the basis of both the selector 13 setting and the electric signals generated by transducers 9 and 10.

Processing unit 11 presents nine inputs 31-39 and six outputs 41-46. Inputs 31, 32 and 33 are connected respectively to the cursor of potentiometer 14 and to transducers 9 and 10. Inputs 34 and 35 are connected to respective blocks 24 and 25 for generating electric signals depending on the electrodynamic braking efficiency and traveling speed of train 1. Input 36 is connected to a transducer 26a for indicating the setting of an electrovalve 30a installed in car 23a. Input 37 is connected to a series of alarm contacts 27a, ... 27n installed in respective cars 23a, ... 23n. Inputs 38 and 39 are connected to known circuits (not shown) for supplying unit 11 with predetermined brake control signals under specific operating conditions.

Outputs 41 and 42 are connected respectively to electrovalves 3 and 4; and outputs 43 and 44 to respective electrovalves 3a and 4a in car 23a, for supplying or exhausting compressed air from main line 16. Output 45 is connected to an electrovalve 30a series-connected to an emergency exhaust member 28a passenger-operated simultaneously to contact 27a, said electrovalve 30a being designed to intercept exhaust of main line 16 as described hereinafter. Output 46 is connected to an appropriate electrodynamic brake control device 47.

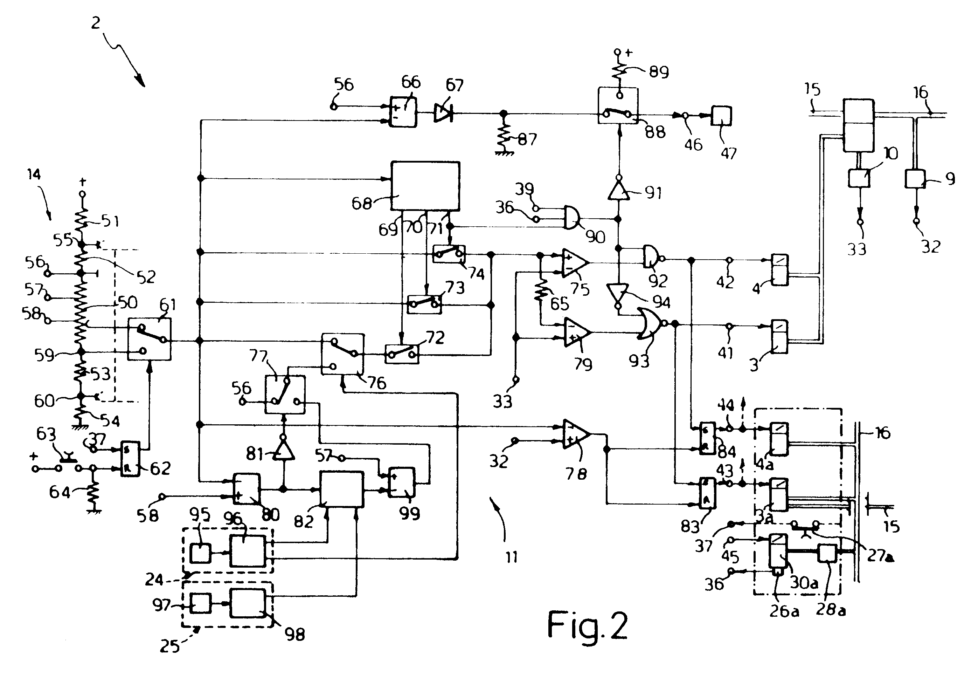

The main features of electronic processing unit 11 will be described with special reference to Fig.2. Potentiometer 14 substantially consists of a voltage divider consisting of a central potentiometric portion 50 with a cursor, a pair of fixed positive pole resistors 51, 52, and a pair of fixed ground resistors 53, 54, so as to produce gradually decreasing voltage pickup points 55, 56, 57, 58, 59, 60.

The cursor on portion 50 is connected to a switch terminal on switch 61, the other switch terminal being connected to pickup point 59. Switch 61 is controlled by an SR flip-flop 62 having the S input connected to terminal 37, and the R input to a reset network installed in the drive cab of train 1 and consisting of a positive-pole-connected push-button 63 and a grounded resistor 64.

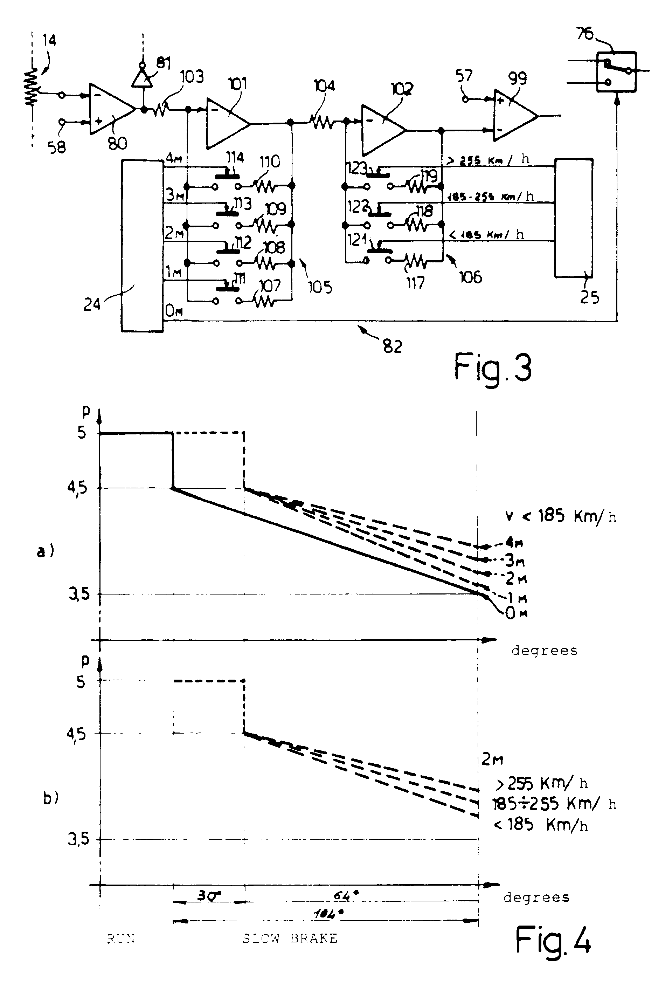

The common terminal of switch 61 is connected to the following inputs or terminals:
the inverting input of a subtracter circuit 66 having its non-inverting input connected to terminal 56 and its output connected to the anode of diode 67;
the input of a combining network 68 having three outputs 69, 70, 71 connected to respective control inputs of respective switches 72, 73, 74;
the first terminal of switches 73 and 74 having a second terminal connected to the second terminal of switch 72, to the non-inverting input of comparator 75, and to the inverting input of comparator 79 via resistor 65;
the first switch terminal of a controlled switch 76 having its common terminal connected to the first terminal of switch 72, and its second switch terminal connected to a common terminal of a further controlled switch 77;
the inverting input of a comparator 78 having its non-inverting input connected to terminal 32 and its output connected to the R input of two SR flip-flops 83, 84;
the inverting input of a subtracter circuit 80 having its non-inverting input connected to terminal 58 and its output connected to both the input of a NOT circuit 81 (the output of which is connected to the control input of switch 77) and the input of a variable gain amplifier 82 shown in detail in Fig.3.

The cathode of diode 67 is grounded via resistor 87 and also connected to a switch terminal of a controlled switch 88, the other switch terminal of which is connected to the positive pole via resistor 89 and a common terminal connected to terminal 46.

Output 71 of combining network 68 is also connected to a first input of a three-input AND circuit 90 having its second and third inputs connected respectively to terminals 36 and 39, and its output connected to the input of a NOT circuit 91, to a first input of a two-input NAND circuit 92, and to one input of a two-input NOR circuit 93 via a NOT circuit 94.

The second inputs of NAND circuit 92 and NOR circuit 93 are connected to respective outputs of comparators 75, 79, the inverting and non-inverting inputs of which are connected to terminal 33.

The outputs of NAND circuit 92 and NOR circuit 93 are connected respectively to terminals 42 and 41, as described with reference to FIG.1. Said outputs are also connected to respective S inputs of flip-flops 84 and 83, the outputs of which are connected to terminals 44 and 43 in such a manner as to control electrovalves 4a or 3a in car 23a, as well as corresponding electrovalves installed in the other cars.

The output of NOT circuit 91 is connected to a control input of controlled switch 88.

Amplifier 82 presents two gain conditioning inputs connected respectively to the outputs of blocks 24 and 25 for generating electric signals depending on the electrodynamic braking efficiency of train 1 (via the electric motors on locomotives 21 and 22) and on actual traveling speed.

Block 24 substantially consists of an efficiency indicator 95 consisting of four switches, each assigned to a respective motor on locomotives 21 and 22, and which is closed or opened according to whether the motor is capable of braking electrodynamically or not; and a combining network 96 (Fig.3) for supplying output signals depending on the number of motors on locomotives 21 and 22 capable of braking electrodynamically. An auxiliary output of network 96, which only presents an active signal in the event of zero electrodynamic braking efficiency, is connected to a control input of switch 76.

Block 25 substantially comprises a generator 97 for generating a signal proportional to the traveling speed of train 1; and a comparator 98 for comparing said signal with a number of reference signals and so determining within which reference speed range train 1 is traveling.

The output of amplifier 82 is connected to the inverting input of a subtracter circuit 99 having its non-inverting input connected to terminal 57 supplying a reference voltage signal from potentiometer 14.

In the embodiment shown in Fig.3, amplifier 82 consists of two amplifying units having respective cascade-connected amplifiers 101, 102, each with an input resistor 103, 104 and an input-output connecting network 105, 106 consisting of a number of parallel branches, each having a resistor and a series-connected switch controlled by generator 24 or 25.

Network 105 presents four branches with four resistors 107, 108, 109, 110 series-connected to four switches 111, 112, 113, 114, each having a control input connected to a respective output of generator 24. In actual use, switches 111, 112, 113, 114 are closed when the number of motors capable of braking electrodynamically is 4, 3, 2 and 1 respectively.

Network 106 presents three branches with three resistors 117, 118, 119 series-connected to three switches 121, 122, 123, each having a control input connected to a respective output of generator 25. In actual use, switches 121, 122, 123 are closed when the traveling speed of train 1 is below 185 km/h, between 185 and 255 km/h, and over 255 km/h respectively.

The amplifying unit comprising amplifier 101 presents a gain preferably greater than 1, whereas the one comprising amplifier 102 provides for attenuation with a gain of preferably 1 or less. For example, the resistance of the resistors in network 105 is always greater than that of resistor 103, and increases in value from resisor 110 to 107. Similarly, the resistance of the resistors in network 106 increases from resistor 119 to 117, the value of which is preferably equal to that of resistor 104.

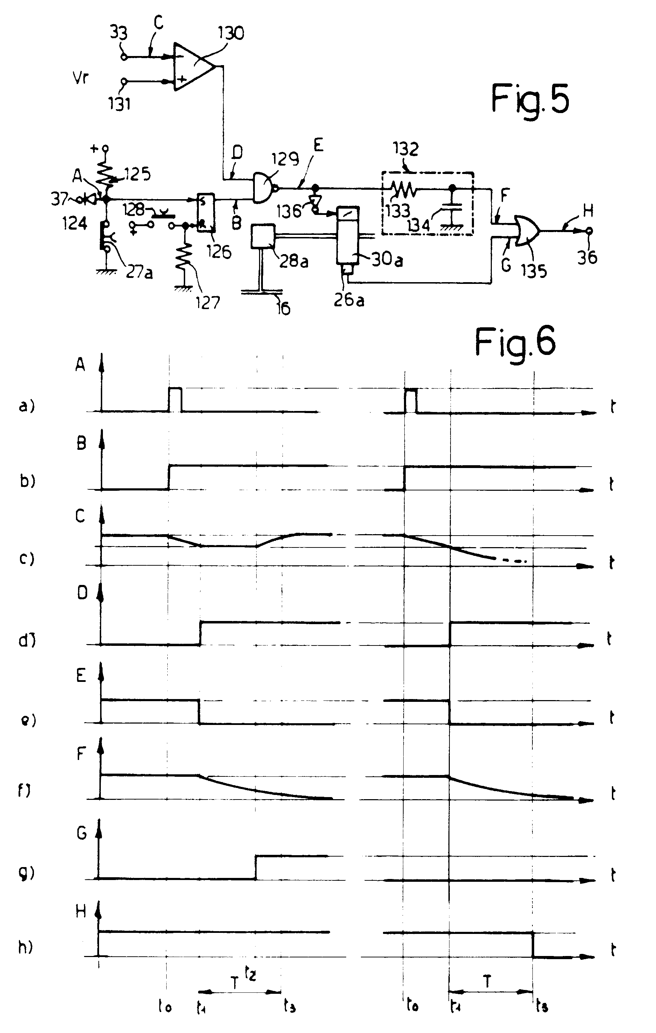

Operation of the above amplifying units will be described in detail later on in connection with system 2 analysis of the combined (pneumatic and electrodynamic) brake condition, and with the aid of Fig.4 showing a graph of the air pressure inside main line 16 for different settings of selector 13 controlling potentiometer 14. Fig.5 shows, in detail, a possible circuit arrangement in each car 23, for catering to emergency operation of the communication cord.

Said circuit arrangement, e.g. the one in car 23a, presents a contact 27a having one terminal grounded and the opposite terminal connected to terminal 37 via the anode-cathode junction of decoupling diode 124, to the positive pole via resistor 125, and to the S input of SR flip-flop 126. The R input of flip-flop 126 is connected to a normal reset network substantially consisting of a grounded resistor 127 and a push-button 128 connected to the positive pole.

The output of flip-flop 126 is connected to one input of a two-input NAND circuit 129, the other input of which is connected to the output of a voltage comparator 130 having its inverting input connected to terminal 33 and its non-inverting input 131 connected to a terminal supplying a reference voltage signal (Vr) as described in more detail later on.

The output of NAND circuit 129 is connected to electrovalve 30a (via NOT circuit 136), and to a delay network 132 consisting of resistor 133 and condenser 134. The output of network 132 and the terminal connecting position transducer 26a are connected to respective inputs of NOR circuit 135, the output of which is connected to terminal 36.

A detailed description will now be given of the main functions performed by system 2.

### OVERLOAD

This condition requires that main line 16 be supplied at greater than normal running pressure. In the case of cars featuring brake systems with different supply pressures, this is essential for ensuring all the cars are supplied at the same pressure (e.g. 5.4 bar) and then gradually restored to normal running pressure. The overload function is performed by setting the cursor of potentiometer 14 to pickup point 55 (Fig.2). This substantially results in a particularly high amplitude signal being supplied to the input of comparison network 68, which emits a 0 signal at output 70 and level 1 signals at outputs 69 and 71, for closing switch 73 and opening switches 72 and 74.

The signal picked up at point 55 is supplied to comparators 75 and 79, which immediately disable electrovalve 4 and enable electrovalve 3 via NOR circuit 93 and electrovalves 3a, ... 3n via flip-flip 83. Electrovalve 3 supplies the control chamber of relay valve 8, which, in turn, raises the pressure on main line 16. Once the required pressure is reached in the chamber of relay valve 8 and main line 16, signals are generated by respective transducers 10 and 9 for disabling excitation of electrovalve 3 and electrovalves 3a,...3n via comparator 78 and flip-flop 83.

The signal picked up at point 55 by potentiometer 14 is actually added to a ramp signal generated by an appropriate circuit (not shown) which, being of known performance, is not described herein for the sake of simplicity.

### RUN

This is practically the same as the overload condition described above, the only difference being that potentiometer 14 is set to pickup point 56, thus producing a slightly lower voltage level and, consequently, a lower pressure (e.g. 5 bar) in main line 16.

### CREW REQUESTED BRAKE

This may be performed in one of four operating modes:
a) pneumatic brake;
b) electrodynamic brake;
c) combined (electrodynamic and pneumatic) brake;
d) fast brake.

### a) Pneumatic brake

This applies in the event of zero electrodynamic braking efficiency, in which case, the OM output of generator 24 (Fig.3) sets switch 76 as shown in Fig.2, thus eliminating the circuit portion connected to switch 77.

The signal picked up by potentiometer 14 corresponds to the center portion 50 cursor setting, which signal provides for closing switch 72 by virtue of output 69 of comparing network 68 switching to 0, and for opening switches 73 and 74 by virtue of outputs 70 and 71 of network 68 being set to 1.

Consequently, the output of NAND circuit 92 switches to 1, and the output of NOR circuit 93 to 0, thus energizing both electrovalve 4 for exhausting the control chamber of relay valve 8, and electrovalves 4a,...4n for exhausting main line 16 of cars 23a,...23n.

The pressure in said control chamber and main line 16 falls until the signals generated by respective transducers 10 and 9 equal the voltage signal set on potentiometer 14, at which point, the required braking force is maintained.

The pneumatic-only air pressure on main line 16 is as shown by the continuous line in Fig.4a, and ranges from a maximum of 4.5 bar, corresponding substantially to application of the brake blocks, to a minimum of 3.5 bar, corresponding to maximum pneumatic-only service braking when selector 13 is turned 104° in relation to the initial brake setting.

### b) Electrodynamic brake

This applies in the event of other than 0 electrodynamic braking efficiency, and when the cursor on potentiometer 14 slides over portion 50, substantially describing a 30° angle between pickup points 56 and 58 (Fig.4). When this occurs, the analogue signal picked up by the cursor is supplied to subtracter circuit 66 which, after subtracting the running reference signal (terminal 56), supplies it to device 47 via switch 88, so as to graduate electrodynamic braking force as a function of the cursor setting.

As said analogue signal is greater than the reference signal at terminal 58 of subtracter circuit 80, the output of substracter circuit 80 is less than 0, thus setting switch 77 as shown in Fig.2 via a 1 signal at the output of NOT circuit 81. The running reference signal (terminal 56) is therefore supplied to comparators 75 and 79 via switches 77 and 76 (switch 76 being set to the opposite position to that shown, by the control signal at the OM output of generator 24). The brake system on train 1 therefore operates as though the above running setting were to apply, thus maintaining a 5 bar pressure, for example, in main line 16 as shown in Fig.4.

When the cursor reaches pickup point 58, the analogue signal at the output of subtracter circuit 66 is obviously sufficient for achieving maximum electrodynamic braking via device 47.

### c) Combined (electrodynamic and pneumatic) brake

This applies in the event of other than 0 electrodynamic braking efficiency, and when the cursor of potentiometer 14 slides over portion 40, substantially describing an angle of 64° between pickup points 58 and 59 (Fig.4). For the reasons already stated, in such a condition train 1 is already subjected to maximum electrodynamic braking force, the pneumatic contribution being graduated as a function of both electrodynamic braking efficiency and the traveling speed of train 1.

As the analogue signal picked up by the cursor of potentiometer 14 is less than the reference signal at terminal 58 of subtracter circuit 80, the output of subtracter circuit 80 is positive and proportional to the difference between them. Via NOT circuit 81, switch 77 is therefore set to the opposite position to that shown in Fig.2, thus supplying the output signal from subtracter circuit 99 to comparators 75 and 79 via switches 77 and 76 and switch 72.

Before reaching the output of comparator 99, the output signal from subtracter circuit 80 is conditioned threefold (Fig.3) for meeting the following requirements:
1) decreasing pneumatic contribution alongside increasing electrodynamic braking efficiency;
2) decreasing pneumatic contribution alongside increasing speed of train 1;
3) with the cursor set to pickup point 59 and a traveling speed of within 185 km/h, combined electrodynamic-pneumatic braking force should equal maximum pneumatic service braking force (with zero electrodynamic braking efficiency).

The above requirements are met by means of the circuit in Fig.3.

With reference to Fig.3, subtracter circuit 99 supplies an electric output signal corresponding, in the case of a 0 signal at the output of subtracter circuit 80, to the signal at terminal 57, thus resulting solely in application of the brake blocks (4.5 bar pressure in main line 16).

In the case of a positive signal at the output of subtracter circuit 80, subtracter circuit 99 supplies an output signal equal to the difference between the previous signal and the contribution of said positive signal amplified on the basis of electrodynamic braking efficiency and the traveling speed of train 1, as already stated.

The air pressure in main line 16 is therefore as shown in Fig.4a, wherein lines 4M, 3M, 2M and 1M show air pressure performance depending on whether electrodynamic braking is provided for by four, three, two or one motor respectively, and assuming, in all four cases, a traveling speed of below 185 km/h. The Fig.4b graph shows air pressure performance in main line 16 assuming electrodynamic braking is provided for by two motors, with respective traveling speeds of >255, 185-255 and <185 km/h.

### d) Fast brake

The fast brake function is performed by setting the cursor of potentiometer 14 to pickup point 60 (Fig.2). This substantially results in a particularly low amplitude signal being supplied to the input of comparison network 68, which supplies a 0 signal at output 71 and positive signals at outputs 69 and 70 for closing switch 74 and opening switches 72 and 73.

The 0 signal at the output of network 68 also zeroes the output of AND circuit 90, which, via NOT circuit 91, activates switch 88, thus producing a maximum control signal on device 47 and, consequently, maximum electro-dynamic braking force. Moreover, the 0 signal at the output of AND circuit 90 switches the output of NAND circuit 92 to 1, thus energizing electrovalve 4 and also electrovalves 4a,...4n via flip-flop 84.

This results in a sharp fall in pressure inside main line 16, accompanied by effective braking action which is further enhanced in known manner (not whown) by the opening of a wide passage on selector 13 for further exhausting and reducing the pressure on main line 16.

### OPERATION OF THE COMMUNICATION CORD

In view of the potentially high speed of train 1, system 2 is designed to prevent the train being stopped by a passenger operating the communication cord, which function is performed exclusively by the crew on the basis of appropriate emergency alarms and indicators. Provision is made, however, for stopping the train in the event of a breakdown on system 2.

When the communication cord is pulled, for example, by a passenger in car 23a, contact 27a is temporarily and immediately broken (instant t0 in Fig.6), and main line 16 exhausted via exhaust member 28a and de-energized normally-open electrovalve 30a.

The breaking of contact 27a switches to 1 the outputs of flip-flops 62 (Fig.2) and 126 (Fig.5).

Flip-flop 62 immediately activates switch 61 for achieving maximum service braking as already described; which condition may be reset by the crew simply pressing button 63, for preventing the train from being stopped on viaducts or inside tunnels, etc.

In more detail, the output of flip-flop 126 maintains a logic level 1 at one of the two inputs of NAND circuit 129, the other input of which switches from 0 to 1 the instant (t1 in Fig.6) the pressure detected by transducer 10 causes this to generate an electric signal lower than the Vr reference signal at the non-inverting input of comparator 130 in Fig.5.

Simultaneous logic level 1 signals at the inputs of NAND circuit 129 energize (instant t2) electrovalve 30a, which, within a given operating time, intercepts exhaust of main air line 16.

When the output signal of NAND circuit 129 switches from 1 to 0, this also discharges condenser 134 of timing network 132, the output of which switches from 1 to 0 after a time interval (T in Fig.6) which, providing electrovalve 30a functions correctly, is greater than the operating time of electrovalve 30a. The signal generated by position transducer 26a therefore switches to 1, indicating correct functioning of electrovalve 30a, and the output signal of OR circuit 135 remains at logic level 1.

Should electrovalve 30a fail to operate (second half of the Fig.6 graphs), the signal at terminal 36 switches to 0 at instant t3, thus providing for maximum electrodynamic braking via AND circuit 90, NOT circuit 91, controlled switch 88 and device 47, as well as fast braking by forcing the output of AND circuit 90 to logic level 0, which immediately energizes electrovalves 4, 4a,...4n and de-energizes electrovalves 3, 3a,...3n. Failure of button 27a and correct functioning of rapid exhaust member 28a will result in fast braking only. That is to say, no possibility exists of preventing discharge of rapid exhaust member 28a via excitation of electrovalve 30a and, consequently, a gradual, inevitable fall in pressure on main line 16 via rapid exhaust member 28a and electrovalve 30a.

In neither of the latter two cases is the crew in a position to prevent automatic arrest of train 1.

The advantages of the system according to the present invention will be clear from the foregoing description. Firstly, it provides for effectively combining electrodynamic and pneumatic braking action in a manner which could not possibly be demanded continuously from the crew.

Secondly, despite providing for optimum automatic performance, system 2 is extremely safe and reliable under all operating conditions, by enabling automatic arrest of train 1 in the event of malfunctioning of any of the electronic control circuits on the system.

To those skilled in the art it will be clear that changes may be made to system 2 as described and illustrated herein without, however, departing from the scope of the present claims.

## Claims

1. A railroad train brake control system, said train (1) presenting at least one electric locomotive (21,22) and a number of cars, said system comprising:
a pneumatic brake comprising:
an air supply line (15);
a main air line (16);
a relay valve (8) between said supply line (15) and said main air line (16);
a pair of electrovalves (3,4) for respectively suppling and exhausting a relay valve (8) control chamber ;
a pair of pressure transducers (9,10) for generating electric signals proportional to the air pressure in the main air line (16) and a relay valve (8) control chamber respectively;
said system further comprising:
a system operating mode selector (13) (overload, run, slow brake, fast brake, etc) generating an electric brake control signal as function of its settings;
an electrodynamic brake (47);
first means (24) for generating a first electric signal depending on electrodynamic braking efficiency of said electric locomotive (21,22);
second means (25) for generating a second electric signal depending on the travelling speed of said train (1);
an electronic processing unit (11) controlling the excitation of said electrovalves (3,4) of said pneumatic brake and said electrodynamic brake (47) on the basis of the settings of said selector (13), said first and second signals, and said electric signals supplied by said transducers (9,10),
characterized in that said electronic unit (11) comprises first switch means (76) controlled by said first signal and designed to assume, in the event of zero electrodynamic braking efficiency (or any rate below a given predetermined value), a first operation position wherein said electric signal on said selector is picked up directly, or a second operating position wherein, in the event of other than zero electrodynamic braking efficiency, the signal of said selector (13) is fed to third means (82) outputting a control signal for said pneumatic brake;
said third means (82) being controlled by said first (24) and second means (25), in a condition where the train is already subjected to maximum electrodynamic braking force, in order to decrease the pneumatic braking contribution with the increasing of the speed of train (1) and decreasing pneumatic braking contribution alongside increasing electrodynamic braking efficiency correlated with the number of motors capable of electrodynamic braking.

2. A system as claimed in claim 1, characterized by the fact that it comprise first subtracting means (80) for comparing said electric signal generated via said selector (13) with a reference signal;
said third means (82) including an amplifying block input connected to said first subtracting means and having a gain controlled by said first and second signal.

3. A system claimed in claim 2, characterized by the fact that said gain is adjustable in such a manner to be equal or greater or less than one.

4. A system as claimed in claims 2 or 3, characterized by the fact that said first generating means (24) substantially comprise means (95) for detecting the electrodynamic braking efficiency of the motors of said train (1); and a combining network (96) connected to respective outputs of said detecting means (96) for generating control signals supplied to said electronic unit (11) and correlated with the number of said motors capable of electrodynamic braking.

5. A system as claimed in any one of the foregoing claims from 2 to 4, characterized by the fact that said second generating means (25) substantially comprise means (97) for detecting the travelling speed of said train (1); and a comparing network (98) connected to said detecting means (97) for generating a number of control signals, each assigned to a given speed range of said train (1).

6. A system as claimed in one of the foregoing claims from 2 to 5, characterized by the fact that said amplifying block (82) presents a first and a second cascade-connected amplifying unit, the gain of which is conditioned respectively by said first (24) and said second (25) generating means.

7. A system as claimed in claim 6, characterized by the fact said first amplifying unit comprises a first amplifier (101) having a first gain conditioned network (105) controlled by said first generating means (24).

8. A system as claimed in claim 6 or 7, characterized by the fact that said second amplifying unit comprises a second amplifier (102) having a second gain condition network (106) controlled by said second generating means (25).

9. A system as claimed in one of the foregoing claims from 2 to 8, characterized by the fact that it comprises second subtracting means (99) for receiving the signal generated by said amplifying block (82) and for generating a difference signal substantially supplied to said first switch means (76); said difference signal being produced by subtracting said signal generated by said amplifying block (82) from a predetermined reference signal conveniently picked up at a point (57) selectable via said selector (13).

10. A system as claimed in one of the foregoing claims, characterized by the fact that it comprises a number of pairs of electrovalves for exhausting (3a,... 3n) and supplying (4a,...4n) said main line (16); each pair being installed in a respective car (23a,...23n) on said train (1), and being controlled by said electronic unit (11).

11. A system as claimed in one of the foregoing claims, wherein each car (23a,...23n) on said train (1) presents at least an alarm signal enabling contact (27a,..27n) and a rapid exhaust member (28a,..28n) for exhausting said main line (16); characterized by the fact that, for each said car (23a,...23n) it comprises an electrovalve (30a,...30n) for intercepting the air exhausted via said rapid exhaust member (28a,..28n).

12. A system as claimed in claim 11, characterized by the fact that it comprises second switch means (61) between said selector (13) and said first switch means (76) ;
said second switch means (61) being designed to assume a first operating position wherein said selector (13) is connected to said first switch means (76) and a second operating position wherein said first switch means (76) are connected to a point (60) enabling pickup of a predetermined signal available on said selector (13) and providing for maximum service braking of said train (1); each said enabling contact (27a,...27n) providing, when operated, for switching said second switch means (61) from said first second operating position.

13. A system as claimed in claim 12, characterized by the fact that it comprise crew-operated means (62,63,64) for resetting said first operating position of said second switch means (61) in the event of said second switch means (61) being set to said second operating position by said enabling contact (27a,...27n).

14. A system as claimed in one of the foregoing claims from 11 to 13, characterized by the fact that it comprises means (126,130,129) for enabling each said electrovalve (30a,...30n) designed to intercept the air exhausted via said rapid exhaust member (28a,...28n); said enabling means comprising means (130) for confirming a fall in air pressure inside said control chamber of said relay valve (8).

15. A system as claimed in one of the foregoing claims from 11 to 14, characterized by the fact that each said electrovalve (3a,...3n) presents a position transducer (26a,...26n) for generating a third or a fourth signal depending on whether an actuating member on said electrovalve (30a,....30n) is set to a first or a second operating position.

16. A system as claimed in claim 15, characterized by the fact that it comprises means (135,86,85,88,47) for achieving maximum electrodynamic or fast braking of said train (1); said means being controlled by each said position transducer (26a,...26n).

17. A system as claimed in one of the foregoing claims, characterized by the fact that it comprises fast brake means (60,68,74,88,90,92,84,47) for achieving fast braking of said train;
said fast brake means (60,68,74,88,90,92,84,47) generating maximum electrodynamic braking force and the excitation of said exhausting electrovalves (4,4a..4n) of said locomotive (21,22) and said cars (23a,...23n);
said fast brake means (60,68,74,88,90,92,84,47) further achieving the opening of a wide passage on said main line (16).

## Patentansprüche

1. Bremssteuerungsvorrichtung für einen Zug einer Eisenbahn, wobei dieser Zug (1) mindestens eine elektrische Lokomotive (21, 22) und eine Anzahl von Waggons aufweist und diese Vorrichtung umfaßt:
eine pneumatische Bremse mit:
einer Luftzuführungsleitung (15),
einer Hauptluftleitung (16),
einem Führungsventil (8) zwischen der Luftzuführungsleitung (15) und der Hauptluftleitung (16),
einem Paar von Elektroventilen (3, 4) zur jeweiligen Befüllung und Entleerung einer Kontrollkammer des Führungsventils (8),
einem Paar von Druckübertragern (9, 10) zur Erzeugung von elektrischen Signalen, die jeweils proportional zum Luftdruck in der Hauptluftleitung (16) bzw. zum Luftdruck in der Kontrollkammer des Führungsventils (8) sind,
wobei diese Vorrichtung weiter aufweist:
eine Betriebszustandauswahleinrichtung (13) (Überlast, Fahrt, langsames Bremsen, schnelles Bremsen, etc), die ein elektrisches Bremssteuersignal als Funktion ihrer Einstellung generiert,
eine elektrodynamische Bremse (47),
erste Mittel (24) zur Erzeugung eines ersten elektrischen Signals, das von dem Wirkungsgrad des elektrodynamischen Bremsens der genannten elektrischen Lokomotive (21, 22) abhängt,
zweite Mittel (25) zur Erzeugung eines zweiten elektrischen Signals, das von der Reisegeschwindigkeit des genannten Zuges (1) abhängt,
eine elektronische Steuereinheit (11), welche das Ansprechen der besagten Elektroventile (3, 4) der pneumatischen Bremse und der elektrodynamischen Bremse (47) auf der Basis der Stellung der besagten Zustandsauswahleinrichtung (13), der ersten und zweiten Signale und der besagten elektrischen Signale, die von den Übertragern (9, 10) geliefert werden, steuert,
**dadurch gekennzeichnet**, daß die elektronische Steuereinheit (11) erste Schaltmittel (76) umfaßt, die von dem ersten Signal gesteuert werden und dazu vorgesehen sind, im Fall eines Wirkungsgrades Null des elektrodynamischen Bremsens (oder bei dem Wert eines Wirkungsgrades unterhalb eines vorgegebenen Schwellwertes) eine erste Arbeitsposition, bei der das elektrische Signal der Zustandsauswahleinrichtung direkt aufgenommen wird, oder eine zweite Arbeitsposition einzunehmen, bei der im Falle eines Wirkungsgrades ungleich Null für das elektrodynamische Bremsen das Signal der Zustandsauswahleinrichtung (13) dritten Mitteln (82) zugeleitet wird, die ein Ausgangssteuersignal für die pneumatische Bremse liefern,
wobei die dritten Mittel (82) von den ersten (24) und den zweiten (25) Mitteln in einer solchen Weise gesteuert werden, wenn der Zug bereits der maximalen elektrodynamischen Bremskraft unterliegt, um den Anteil des pneumatischen Bremsens bei steigender Geschwindigkeit des Zuges (1) und bei sich verminderndem pneumatischen Bremsanteil bei gesteigertem Wirkungsgrad des elektrodynamischen Bremsens, der mit der Anzahl der zum elektrodynamischen Bremsen geeigneten Motoren korreliert ist, zu vermindern.

2. Vorrichtung nach Anspruch 1, dadurch gekennzeichnet, daß sie erste Subtraktionsmittel (80) zum Vergleich des elektrischen Signals, das von der Zustandsauswahleinrichtung (13) erzeugt wird, mit einem Referenzsignal umfaßt, wobei die dritten Mittel (82) eine Eingangsverstärkereinheit umfassen, die mit dem ersten Subtraktionsmittel verbunden ist und eine Verstärkung aufweist, die von den ersten und zweiten Signalen gesteuert wird.

3. Vorrichtung nach Anspruch 2, dadurch gekennzeichnet, daß der Verstärkungsfaktor in einer solchen Weise einstellbar ist, um größer als Eins, gleich Eins oder kleiner als Eins zu sein.

4. Vorrichtung nach einem der Ansprüche 2 oder 3, dadurch gekennzeichnet, daß die ersten signalerzeugenden Mittel (24) im wesentlichen Mittel (95) zur Erfassung des Wirkungsgrades des elektrodynamischen Bremsens der Motoren des Zuges (1) und ein verbindendes Netzwerk (96) umfassen, welches mit den jeweiligen Ausgängen der Erfassungsmittel (95) verbunden ist, um Steuersignale zu erzeugen, die der elektronischen Steuereinheit (11) zugeführt werden und die mit der Anzahl der zum elektrodynamischen Bremsen geeigneten Motoren korreliert sind.

5. Vorrichtung nach einem der vorstehenden Ansprüche 2 bis 4, dadurch gekennzeichnet, daß die zweiten signalerzeugenden Mittel (25) im wesentlichen Mittel (97) zur Erfassung der Reisegeschwindigkeit des Zuges (1) und ein vergleichendes Netzwerk (98) umfassen, welches mit den Erfassungsmitteln (97) verbunden ist, um eine Anzahl Von Steuersignalen zu erzeugen, wobei jedes einem vorgegebenen Geschwindigkeitsbereich des Zuges (1) zugewiesen ist.

6. Vorrichtung nach einem der vorstehenden Ansprüche 2 bis 5, dadurch gekennzeichnet, daß die Verstärkereinheit (82) eine erste und eine zweite in Kaskade geschaltete Verstärkerschaltung aufweist, von denen die Verstärkung jeweils durch die ersten (24) bzw. zweiten (25) signalerzeugenden Mittel vorgebeben werden.

7. Vorrichtung nach Anspruch 6, dadurch gekennzeichnet, daß die erste Verstärkungsschaltung einen ersten Verstärker (101) umfaßt, der über ein erstes verstärkungsgesteuertes Netzwerk (105) verfügt, welches von den ersten signalerzeugenden Mitteln (24) angesteuert wird.

8. Vorrichtung nach einem der vorstehenden Ansprüche 6 oder 7, dadurch gekennzeichnet, daß die zweite Verstärkungsschaltung einen zweiten Verstärker (102) umfaßt, der über ein zweites verstärkungsgesteuertes Netzwerk (106) verfügt, welches von den zweiten signalerzeugenden Mitteln (25) angesteuert wird.

9. Vorrichtung nach einem der vorstehenden Ansprüche 2 bis 8, dadurch gekennzeichnet, daß sie über zweite Subtraktionsmittel (99) verfügt, um ein von der Verstärkereinheit (82) erzeugtes Signal aufzunehmen und um ein Differenzsignal zu erzeugen, welches im wesentlichen dem ersten Schaltmittel (76) zugeführt wird, wobei das Differenzsignal dadurch erzeugt wird, daß das von der Verstärkereinheit (82) erzeugte Signal von einem vorbestimmten Referenzsignal abgezogen wird, welches in geeigneter Weise an einem Punkt (57) abgenommen wird, der über die Zustandsauswahleinrichtung (13) auswählbar ist.

10. Vorrichtung nach einem der vorstehenden Ansprüche, dadurch gekennzeichnet, daß sie ein Anzahl von Paaren von Elektroventilen zum Entleeren (3a, ... 3n) und zum Befüllen (4a, ... 4n) der Hauptluftleitung (16) umfaßt, wobei jedes Paar entsprechend in einem Waggon (23a, ... 23n) des Zuges (1) eingebaut ist und von der elektronischen Steuereinheit (11) gesteuert wird.

11. Vorrichtung nach einem der vorstehenden Ansprüche, bei der jeder Waggon (23a, ... 23n) des Zuges (1) mindestens über einen ein Alarmsignal auslösenden Kontakt (27a, ... 27n) und über ein ein schnelles Entleeren gestattendes Element (28a, ... 28n) verfügt, um die Hauptluftleitung (16) zu entleeren, dadurch gekennzeichnet, daß sie für jeden Waggon (23a, ... 23n) über ein Elektroventil (30a, ... 30n) verfügt, um die über das ein schnelles Entleeren gestattende Element (28a, ... 28n) entweichende Luft aufzufangen.

12. Vorrichtung nach Anspruch 11, dadurch gekennzeichnet, daß sie über zweite Schaltmittel (61) zwischen der Zustandsauswahleinrichtung (13) und dem ersten Schaltmittel (76) verfügt, wobei die zweiten Schaltmittel (61) so ausgestaltet sind, um eine erste Betriebsposition, bei der die Zustandsauswahleinrichtung (13) mit dem ersten Schaltmittel (76) verbunden ist, und eine zweite Betriebsposition einzunehmen, bei der die ersten Schaltmittel (76) mit einem Punkt (60) verbunden sind, der eine Aufnahme eines vorbestimmten Signals der Zustandsauswahleinrichtung (13) gestattet und eine maximale Bremsung des Zuges (1) einleitet, wobei jeder auslösende Kontakt (27a, ... 27n), sofern er geschaltet wird, die zweiten Schaltmittel (61) von der ersten zur zweiten Betriebsposition umschaltet.

13. Vorrichtung nach Anspruch 12, dadurch gekennzeichnet, daß sie von der Besatzung des Zuges zu schaltende Mittel (62, 63, 64) umfaßt, um die erste Betriebsposition der zweiten Schaltmittel (61) zurückzusetzen, falls die besagten zweiten Schaltmittel (61) durch die auslösenden Kontakte (27a, ... 27n) in die zweite Betriebsposition gesetzt worden sind.

14. Vorrichtung nach einem der vorstehenden Ansprüche 11 bis 13, dadurch gekennzeichnet, daß sie Mittel (126, 130, 129) umfaßt, um die genannten Elektroventile (30a, ... 30n) auszulösen, die dazu vorgesehen sind, die die über das ein schnelle Entleeren gestattende Element (28a, ... 28n) entweichende Luft aufzufangen, wobei diese Auslösemittel weiterhin Mittel (130) zur Bestätigung des Abfallens des Luftdruckes innerhalb der Kontrollkommer des Führungsventils (8) umfassen.

15. Vorrichtung nach einem der vorstehenden Ansprüche 11 bis 14, dadurch gekennzeichnet, daß jedes Elektroventil (3a, ... 3n) einen Positionsübersetzer (26a, ... 26n) aufweist, um ein drittes und ein viertes Signal zu erzeugen, je nachdem, ob ein Betätigungselement des Elektroventils (30a, ... 30n) auf die erste oder auf die zweite Betriebsposition gesetzt ist.

16. Vorrichtung nach Anspruch 15, dadurch gekennzeichnet, daß sie Mittel (135, 86, 85, 88, 47) zur Erlangung eines maximalen elektrodynamischen Bremsens oder einer Schnellbremsung des Zuges (1) umlaßt, wobei diese Mittel jeweils von jedem der Positionsübersetzer (26a, ... 26n) angesteuert werden.

17. Vorrichtung nach einem der vorstehenden Ansprüche, dadurch gekennzeichnet, daß Schnellbremsmittel (60, 68, 74, 88, 90, 92, 84, 47) vorgesehen sind, um ein schnellstmögliches Abbremsen des Zuges zu erreichen, wobei diese Schnellbremsmittel (60, 68, 74, 88, 90, 92, 84, 47) eine maximale elektrodynamische Bremskraft erzeugen und die Anregung der Ausstoß-Elektroventile (4, 4a, ... 4n) der Lokomotive (21, 22) und der Waggons (23a, ... 23n) gewährleisten, und daß die Schnellbremsmittel (60, 68, 74, 88, 90, 92, 84, 47) weiterhin das Öffnen eines großen Durchlasses in der Hauptluftleitung (16) bewirken.

## Revendications

1. Système de commande de frein pour un train de véhicules ferroviaires, ledit train (1) présentant au moins une locomotive électrique (21, 22) et plusieurs wagons, ledit système comprenant:
un frein pneumatique qui comprend:
un conduit d'alimentation en air (15);
un conduit principale d'air (16);
une servo-soupape (8) entre ledit conduit d'alimentation (15) et ledit conduit principal d'air (16);
deux électrovannes (3, 4) destinées, pour l'une, à alimenter et, pour l'autre, à purger une chambre de commande de la servo-soupape (8);
deux capteurs de pression (9, 10) destinés à engendrer des signaux électriques proportionnels à la pression d'air dans le conduit principal d'air (16), pour l'un, et dans une chambre de commande de la servo-soupape (8, pour l'autre;
ledit système comprenant en outre:
un sélecteur de mode d'exploitation du système (13) (surcharge, marche normale, freinage lent, freinage rapide, etc.) engendrant un signal de commande de frein électrique, en fonction de ses positions de réglage;
un frein électrodynamique (47);
un premier moyen (24) pour engendrer un premier signal électrique dépendant de la capacité de freinage électrodynamique de ladite locomotive électrique (21, 22);
un deuxième moyen (25) pour engendrer un deuxième signal électrique dépendant de la vitesse de déplacement dudit train (1);
une unité électronique de traitement (11) commandant l'excitation desdites électrovannes (3, 4) dudit frein pneumatique et dudit frein électrodynamique (47), sur la base des positions de réglage dudit sélecteur (13), desdits premier et deuxième signaux et desdits signaux électriques fournis par lesdits capteurs (9, 10),
caractérisé en ce que ladite unité électronique (11) comprend un premier moyen de commutation (76) commandé par ledit premier signal et conçu pour se placer, dans le cas d'une capacité de freinage électrodynamique égal à zéro (ou à un taux quelconque situé en dessous d'une valeur prédéterminée donnée), dans une première position active, dans laquelle ledit signal électrique présent sur ledit sélecteur est prélevé directement, ou dans une seconde position active dans laquelle, dans le cas d'une capacité de freinage électrodynamique différente de zéro, le signal dudit sélecteur (13) est transmis à un troisième moyen (82) délivrant un signal de commande pour ledit frein pneumatique;
ledit troisième moyen (82) étant commandé par lesdits premier (24) et deuxième moyens (25), dans une situation où le train est déjà soumis à une force de freinage électrodynamique maximum, afin de diminuer la contribution du freinage pneumatique en fonction de l'augmentation de la vitesse du train (1) et de diminuer la contribution du freinage pneumatique conjointement avec une augmentation de la capacité de freinage électrodynamique, liée au nombre de moteurs aptes à subir un freinage électrodynamique.

2. Système selon la revendication 1, caractérisé par le fait qu'il comprend un premier moyen soustracteur (80) pour comparer ledit signal électrique engendré par l'intermédiaire dudit sélecteur (13), à un signal de référence;
ledit troisième moyen (82) comprenant un bloc d'amplification dont l'entrée est reliée audit premier moyen soustracteur et qui présente un gain régulé par lesdits premier et deuxième signaux.

3. Système selon la revendication 2, caractérisé par le fait que ledit gain est réglable de manière à être égal ou supérieur ou inférieur à un.

4. Système selon la revendication 2 ou 3, caractérisé par le fait que ledit premier moyen générateur (24) comprend essentiellement un moyen (95) pour détecter la capacité de freinage électrodynamique des moteurs dudit train (1); et un réseau combinatoire (96) relié à des sorties respectives dudit moyen de détection (96) pour engendrer des signaux de commande qui sont fournis à ladite unité électronique (11) et qui sont en corrélation avec le nombre desdits moteurs aptes à subir un freinage électrodynamique.

5. Système selon l'une quelconque des revendications précédentes 2 à 4, caractérisé par le fait que ledit deuxième moyen générateur (25) comprend essentiellement un moyen (97) pour détecter la vitesse de déplacement dudit train (1); et un réseau comparateur (98) relié audit moyen de détection (97) pour engendrer plusieurs signaux de commande, affectés chacun à une plage de vitesses donnée dudit train (1).

6. Système selon l'une quelconque des revendications précédentes 2 à 5, caractérisé par le fait que ledit bloc d'amplification (82) présente des première et deuxième unités d'amplification reliées l'une à l'autre en cascade, dont les gains sont respectivement conditionnés par lesdits premier (24) et deuxième (25) moyens générateurs.

7. Système selon la revendication 6, caractérisé par le fait que ladite première unité d'amplification comprend un premier amplificateur (101) possédant un premier réseau (105) d'adaptation de gain, commandé par ledit premier moyen générateur (24).

8. Système selon la revendication 6 ou 7, caractérisé par le fait que ladite deuxième unité d'amplification comprend un deuxième amplificateur (102) possédant un deuxième réseau (106) d'adaptation du gain, commandé par ledit deuxième moyen générateur (25).

9. Système selon l'une des revendications précédentes 2 à 8, caractérisé par le fait qu'il comprend un deuxième moyen soustracteur (99) apte à recevoir le signal engendré par ledit bloc d'amplification (82) et à engendrer un signal de différence essentiellement fourni audit premier moyen de commutation (76); ledit signal de différence étant produit par soustraction dudit signal engendré par ledit bloc d'amplification (82) d'un signal de référence prédéterminé, prélevé de façon appropriée en un point (57) qui peut être sélectionné par l'intermédiaire dudit sélecteur (13).

10. Système selon l'une des revendications précédentes, caractérisé par le fait qu'il comprend plusieurs paires d'électrovannes pour purger (3a,... 3n) et alimenter (4a,... 4n) ledit conduit principal (16); chaque paire étant installée dans un wagon respectif (23a,... 23n) sur ledit train (1), et étant commandée par ladite unité électronique (11).

11. Système selon l'une des revendications précédentes, dans lequel chaque wagon (23a,... 23n) sur ledit train (1) présente au moins un contact de déclenchement d'un signal d'alarme (27a,... 27n) et un organe de purge rapide (28a,.. 28n) pour purger ledit conduit principal (16); caractérisé par le fait que, pour chacun desdits wagons (23a,... 23n), il comprend une électrovanne (30a,... 30n) pour arrêter l'air évacué par l'intermédiaire dudit organe de purge rapide (28a,.. 28n).

12. Système selon la revendication 11, caractérisé par le fait qu'il comprend un deuxième moyen de commutation (61) entre ledit sélecteur (13) et ledit premier moyen de commutation (76);
ledit deuxième moyen de commutation (61) étant conçu pour se placer dans une première position active, dans laquelle ledit sélecteur (13) est relié audit premier moyen de commutation (76), et une seconde position active, dans laquelle ledit premier moyen de commutation (76) est relié à un point (60) permettant le prélèvement d'un signal prédéterminé disponible sur ledit sélecteur (13) et assurant un freinage maximum en service dudit train (1); chacun desdits contacts de déclenchement (27a,... 27n) assurant, lorsqu'il est activé, le basculement dudit deuxième moyen de commutation (61) de ladite première position active dans ladite deuxième position active.

13. Système selon la revendication 12, caractérisé par le fait qu'il comprend des moyens (62, 63, 64), actionnés par l'équipage, pour remettre ledit deuxième moyen de commutation (61) dans ladite première position active, dans le cas où ledit deuxième moyen de commutation (61) a été placé dans ladite seconde position active par ledit contact de déclenchement (27a,... 27n).

14. Système selon l'une des revendications précédentes 11 à 13, caractérisé par le fait qu'il comprend des moyens (126, 130, 129) pour valider l'action de chacune desdites électrovannes (30a,... 30n) conçues pour arrêter l'air évacué par l'intermédiaire dudit organe de purge rapide (28a,... 28n); lesdits moyens de validation comprenant un moyen (130) pour identifier une chute de la pression d'air à l'intérieur de ladite chambre de commande de ladite servo-soupape (8).

15. Système selon l'une des revendications précédentes 11 à 14, caractérisé par le fait que chacune desdites électrovannes (3a,... 3n) présente un capteur de position (26a,... 26n) pour engendrer un troisième ou un quatrième signal, en fonction du fait qu'un élément d'actionnement présent sur ladite électrovanne (30a,.... 30n) est placé dans une première ou une seconde position active.

16. Système selon la revendication 15, caractérisé par le fait qu'il comprend des moyens (135, 86, 85, 88, 47) pour réaliser un freinage électrodynamique ou freinage rapide maximum dudit train (1); ces moyens étant commandés par chacun desdits capteurs de position (26a,... 26n).

17. Système selon l'une des revendications précédentes, caractérisé par le fait qu'il comprend un moyen de freinage rapide (60, 68, 74, 88, 90, 92, 84, 47) pour réaliser un freinage rapide dudit train;
ledit moyen de freinage rapide (60, 68, 74, 88, 90, 92, 84, 47) produisant une force de freinage électrodynamique maximum et l'excitation desdites électrovannes de purge (4, 4a.. 4n) de ladite locomotive (21, 22) et desdits wagons (23a,... 23n);
lesdits moyens de freinage rapide (60, 68, 74, 88, 90, 92, 84, 47) réalisant en outre l'ouverture d'un passage élargi sur ledit conduit principal (16).
